# EUROPEAN PATENT APPLICATION

(11) **EP 4 574 573 A1**
(43) Date of publication of application: **25.06.2025**
(21) Application number: 24383177.3
(22) Date of filing: 25.10.2024
(51) Int. Cl.: B60R 1/072

(54) **EXTERIOR REAR VIEW MIRROR ASSEMBLY FOR VEHICLES**

(71) Applicant: Ficosa Automotive, S.L.U., 08028 Barcelona (ES)
(72) Inventor: GÓMEZ TIMONEDA, David, 08028 Barcelona (ES); BRAVO CORBACHO, David, 08028 Barcelona (ES)
(74) Representative: Balder IP Law, S.L.

(57) **Abstract**

The invention refers to an exterior rear view mirror assembly (1) for vehicles, comprising: a support base (19), a mirror head (20) coupled to the support base, the mirror head in turn (20) comprising: a housing comprising a cover frame (7), a backplate (2) having an outer side (2a) and an inner side (2b), a mirror surface (3) supported on the outer side (2a) of the backplate (2), an actuator (4) comprising a movable part (6). The backplate (2) is coupled to the movable part (6) of the actuator (4), such that the backplate (2) is movable by means of the actuator (4), and the cover frame (7) is also coupled to the movable part (6) of the actuator (4). The coupling between the backplate (2) and the movable part (6) of the actuator (4) and the coupling between the cover frame (7) and the movable part (6) of the actuator (4) are direct couplings.

## Description

### TECHNICAL FIELD

The invention belongs to the technical field of manufacturing of exterior rear-view mirrors for vehicles.

### STATE OF THE ART

Some exterior rear-view mirror assemblies for motor vehicles, include a mirror base or foot adapted for its attachment to vehicle's bodywork, and a mirror head arranged on the mirror foot as well as a mirror glass accommodated in the mirror head and arranged rigidly thereto. At least one articulation is provided between the mirror head and the arrangement of the mirror foot on the vehicle.

An exterior rear-view mirror assembly may include a mirror actuator operable to adjust a mirror reflective element relative to the mirror casing, so as to adjust a rearward field of view of the driver of the vehicle. Foldable exterior mirror assemblies, include an actuator that pivots or folds the mirror casing relative to the side of the vehicle.

There is a need in this technical field for robust rear-view assemblies, free of tolerance problems, and in which the backplate supporting the mirror surface can be easily assembled and disassembled as well as easily serviced

### DESCRIPTION OF THE INVENTION

An aspect of the invention refers to an exterior rear view mirror assembly for vehicles, wherein the assembly comprises: a support base for attaching the assembly to a vehicle, and a mirror head coupled to the support base.

In turn, the mirror head comprises: a housing comprising a cover frame, a backplate having an outer side and an inner side, and a mirror surface supported on the outer side of the backplate, and an actuator formed by a base and a movable part coupled to the base and movable with respect to the base. The cover frame may be integrally formed with the housing or it may be attached to the housing.

According to the invention, the backplate is coupled to the movable part of the actuator, such that the backplate is movable by means of the actuator, and the cover frame is also coupled to the movable part of the actuator.

The backplate and the movable part of the actuator, are directly coupled, that is, these two components back plate and movable part of the actuator, are attached to each other without participation of any other component acting as interface between the back plate and movable part of the actuator, although fastening means, such as screws or similar means, may be used for the attachment. Similarly, the cover frame and the movable part of the actuator, are directly coupled, that is, these two components back plate and movable part of the actuator, are attached to each other without participation of any other component acting as interface between the back plate and movable part of the actuator, although fastening means, such as screws or similar means, may be used for the attachment.

In a preferred embodiment, the cover frame has a window and the movable part of the actuator or at least a part of it, it is placed in the window of the cover frame. The backplate has first engaging means at its inner side, and the first engaging means pass through the window of the cover frame and are engaged with the movable part of the actuator.

Preferably, the first engaging means are flexible clips protruding from the inner side of the backplate. These flexible clips have one end integrally formed with the inner side of the backplate, and a free end configured as a hook.

The movable part of the actuator has a first contacting surface and a second contacting surface, distanced from the first contacting surface. The first contacting surface of the actuator is closer to the mirror surface than the second contacting surface, and first engaging means of the backplate are engaged with the second contacting surface.

The assembly includes second engaging means for coupling the movable part of the actuator with the cover frame, and wherein part of these second engaging means are formed at the cover frame's window, and part of these second engaging means are formed in the movable part of the actuator.

The assembly may comprise biasing means interposed in between the inner side of the backplate and a front surface of the movable part of the actuator, wherein these biasing means are configured to press on the movable part of the actuator away from the backplate. Preferably, the biassing means are embodied as flexible tabs having one end integrally formed with the inner side of the backplate and another end is a free end. The biassing means are in contact with the first contacting surface of the actuator, or with any other front surface of the movable of the actuator. Therefore, the fixation takes place between these biasing means contacting the front surface of the actuator and the fastening of the clips with the second contacting surface.

The second engaging means comprises tongues extending radially from the movable part of the actuator, and fixation clips integrally formed at the casing frame's window. The casing frame's window has an annular surface extending radially, and the movable part of the actuator is retained in between the fixation clips and the annular surface of the window. The fixation clips are in contact with the first contacting surface of the movable part, and the tongues are in contact with the annular surface of the window.

With the above-described arrangement, the backplate with the mirror surface is interchangeable as it is independent of the cover frame, so that, the backplate can be disassembled without removing the cover frame. This results in a much more robust assembly with far fewer problems with tolerances and backplate disengagement without the need to remove the frame.

### BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:
Figure 1.- shows a perspective view of the assembly according to the invention.
Figure 2.- shows an exploded view of the assembly according to the invention.
Figure 3.- shows a cross-sectional view of the assembly according to the invention.
Figures 4 and 5.- show two exploded views of the same arrangement but from different angles, illustrating the back plate, cover frame and actuator relative arrangement.
Figure 6.- shows a perspective view of the actuator coupled with the back plate. The Figure includes an enlarged detail D of the coupling.

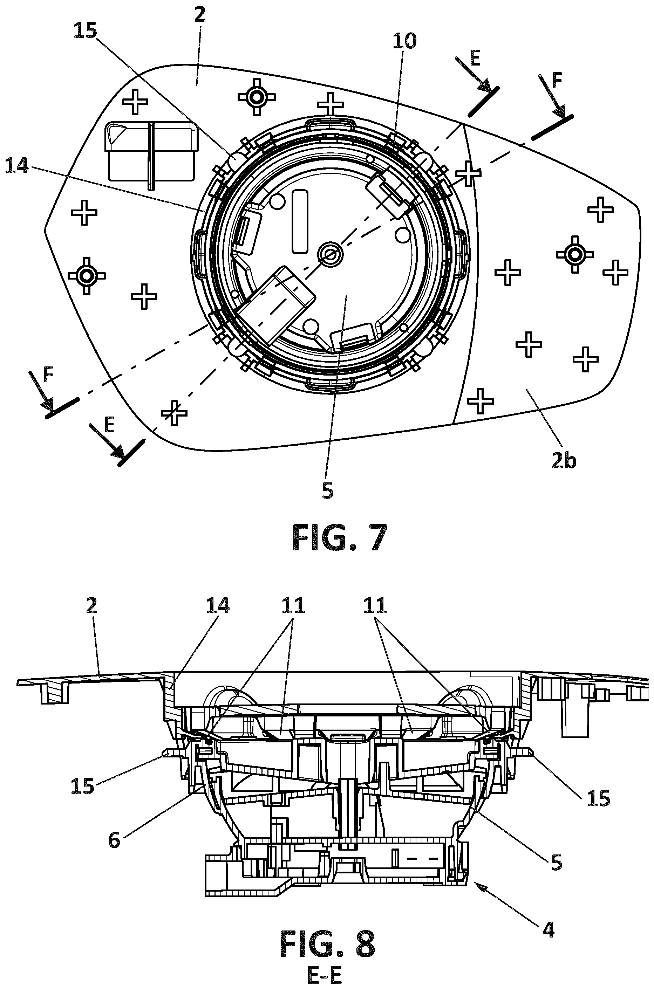

Figure 7.- shows and elevational view of the arrangement of Figure 6.

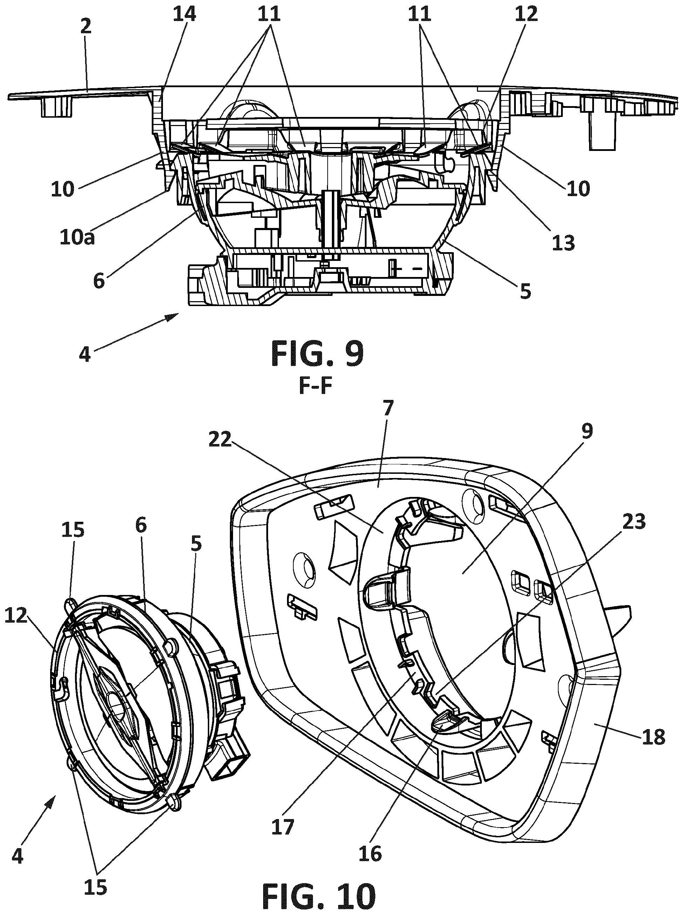

Figures 8 and 9.- show two cross-sectional views taken respectively at planes E-E, F-F identified in Figure 6.
Figures 10 and 11.- show two perspective views of the coupling between the cover frame and the actuator. Figure 11 includes an enlarged detail A.
Figure 12.- shows a cross-sectional view of the coupling between the cover frame and the actuator.

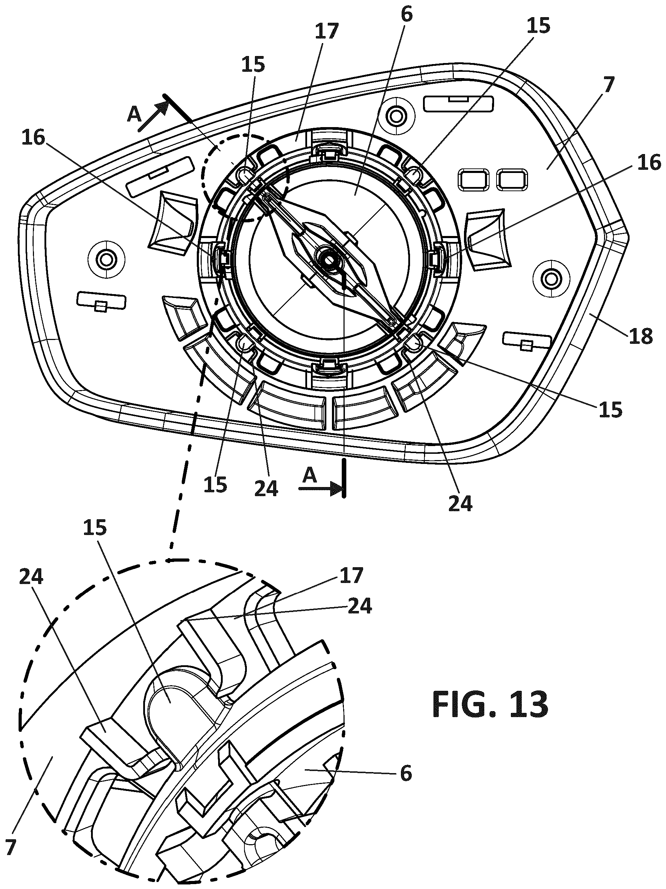

Figure 13.- shows an elevational view of the coupling between the cover frame and the actuator. The Figure includes an enlarged detail C.
Figure 14.- shows a perspective view of the coupling between the housing frame and actuator. The Figure includes enlarged details D and E.
Figure 15.- shows a general exploded view of a complete assembly.

### PREFERRED EMBODIMENTS OF THE INVENTION

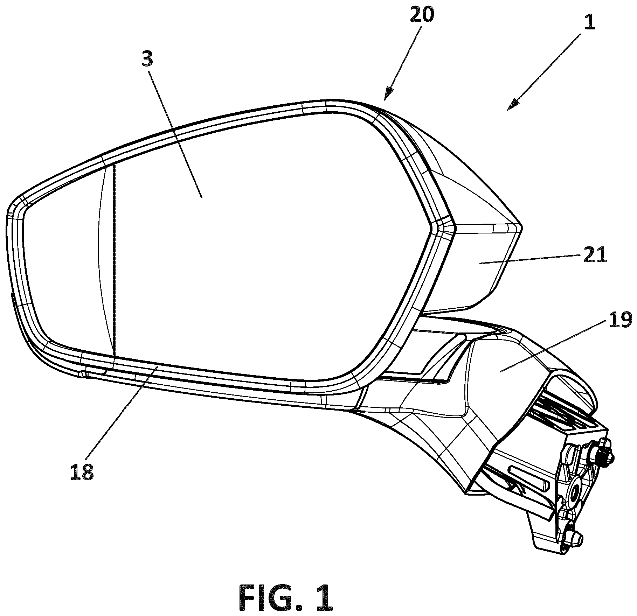

As shown in **Figure 1****,** the exterior rear-view mirror assembly (1) according to the invention, comprises: a support base (19) for attaching the assembly (1) to a vehicle, a mirror head (20) coupled to the support base (19), and a mirror surface (3).

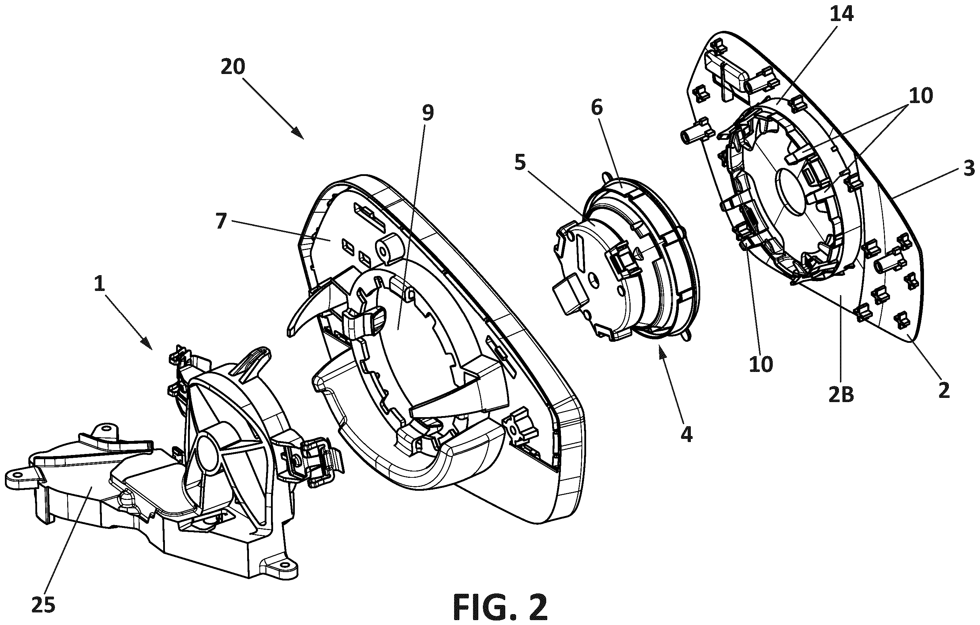

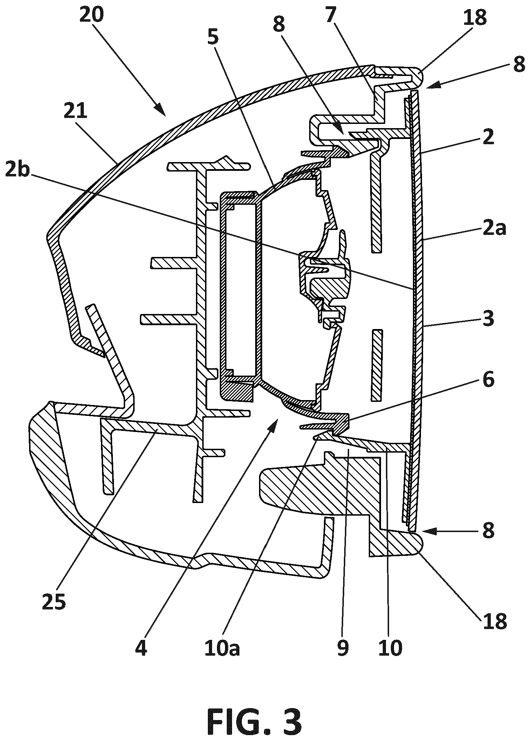

More in detail as shown in **Figures 2** and **3****,** the mirror head (20) comprises a housing (21), a cover frame (7), and a backplate (2) having an outer side (2a) and an inner side (2b), and with the mirror surface (3) placed on the outer side (2a). An actuator (4) which is formed by a base (5) and a movable part (6) which is movable with respect to the base (5), is enclosed in the mirror head (20).

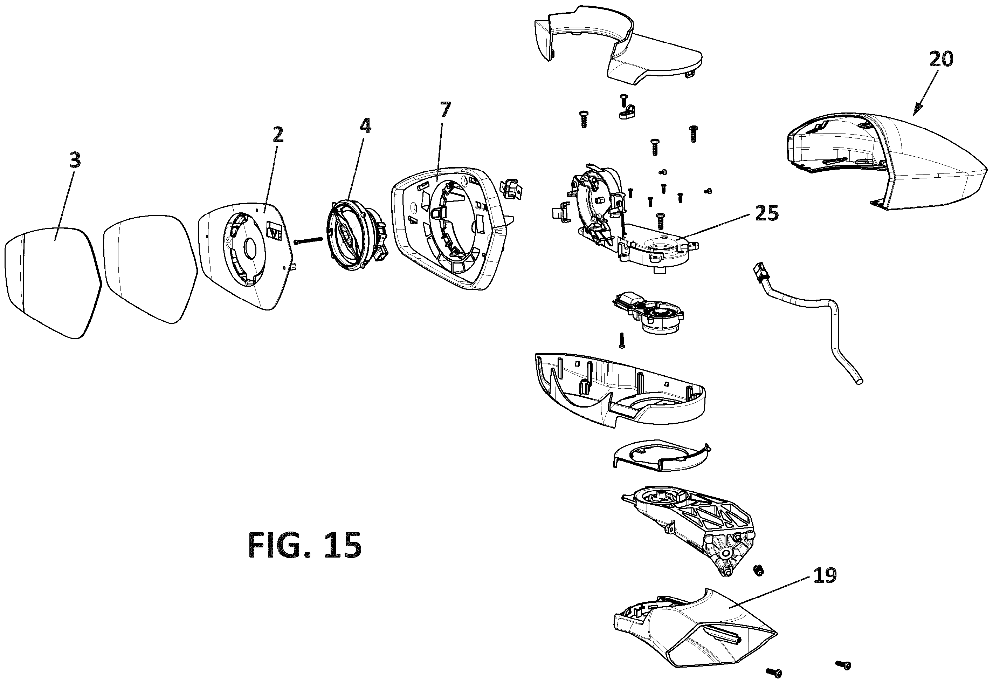

As better shown in **Figure 3****,** the base (5) of the actuator (4) is attached to a housing bracket (25) which in turn is coupled to the support base (19) (shown in **Figure 15**), and the backplate (2) is coupled or attached directly to the movable part (6) of the actuator (4), such that the backplate (2) is movable by means of the actuator (4). The cover frame (7) is also coupled or attached directly to the movable part (6) of the actuator (4). Preferably, there is a separation space (8) in between the backplate (2) and the cover frame (7), so that the backplate (2) and the cover frame (7) are independent bodies, which are attached independently to the same actuator (4).

Therefore, the backplate (2) with the mirror surface (3) and the cover frame (7) move in tandem, with the advantage that the backplate (2) is independent from the cover frame (7) so that it can be dissembled easily without removing the cover frame (7). This results in a much more robust assembly with far fewer problems with tolerances and backplate disengagement without the need to remove the frame.

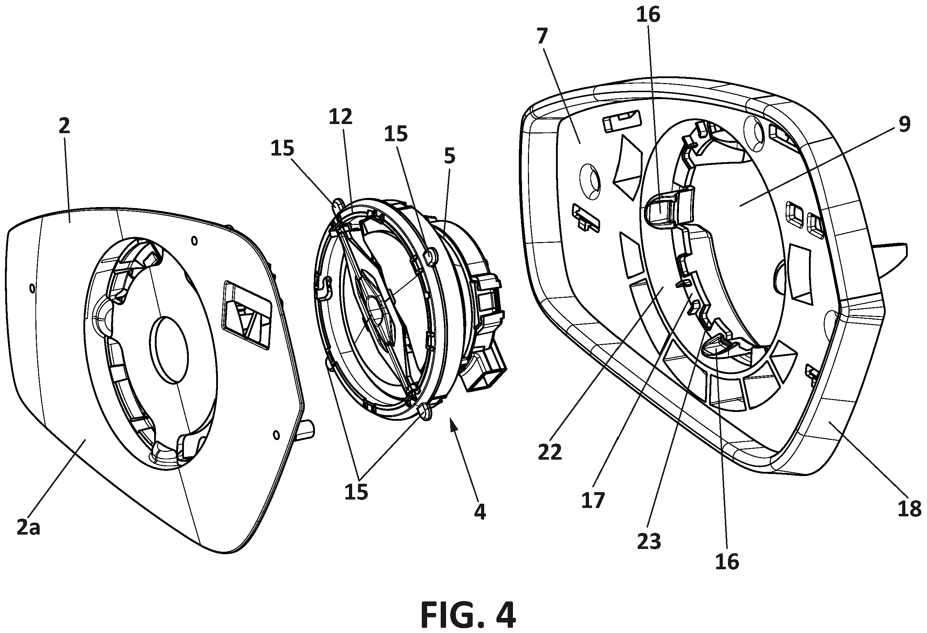

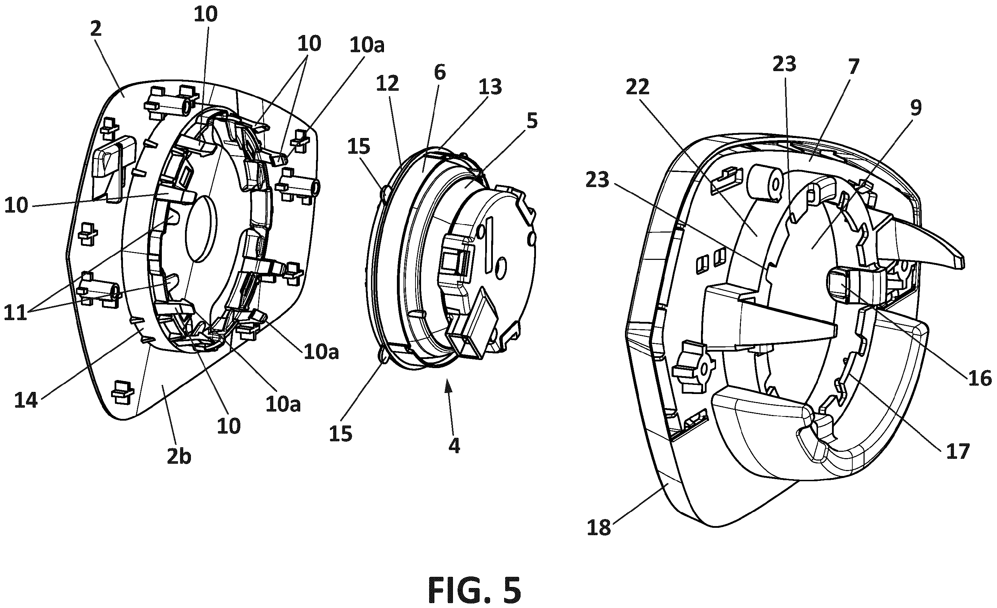

As represented in **Figures 4** and **5****,** the backplate (2) has a frame (14) formed on its inner side (2b), and first engaging means, which in this embodiment are realized as flexible clips (10), protruding from the frame (14). The backplate (2) is a flat or slightly curved body, and the frame (14) is formed on the inner side (2b) of the backplate (2).

The flexible clips (10) have one end integrally formed with the frame (14) of the backplate (2), and a free end (1 0a) configured as a hook which protrudes internally in the assembly. in this embodiment, the frame (14) is a wall extending axially from the surface of the backplate (2), in particular projecting from its inner side (2b) and configured as a closed and continuous loop.

Furthermore, the backplate (2) has flexible tabs (11) having one end also integrally formed with the frame (14) and the other end is a free end. The flexible tabs (11) project from the frame (14) and are inclined towards the center of the frame (14). Optionally, the flexible tabs (11) are inclined towards the outer side of the assembly.

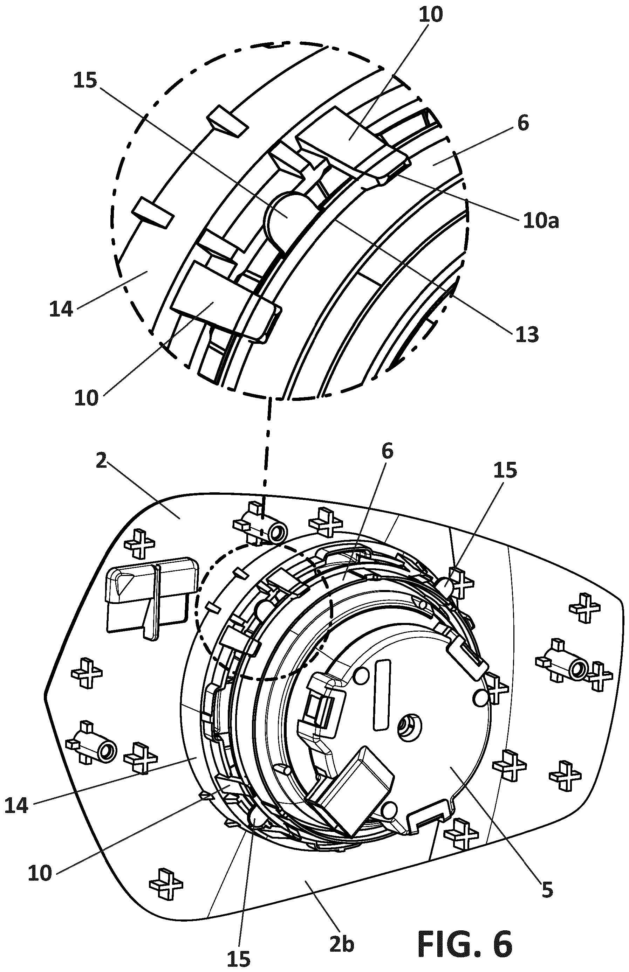

The movable part (6) of the actuator (4) has a first contacting surface (12) and a second contacting surface (13) distanced from the first contacting surface (12), wherein the first contacting surface (12) of the actuator (4) is closer to the mirror surface (3) than the second contacting surface (13). The flexible clips (10) of the backplate (2) are configured to be engaged with the second contacting surface (13) of the movable part (6), as shown more clearly in the enlarged detail "D" of **Figure 6****,** so as to press the movable part (6) towards the backplate (2). As it can be appreciated, the backplate (2) and the movable part (6) of the actuator (4), are directly attached, without participation of any other component.

The flexible tabs (11) are interposed in between the inner side (2b) of the backplate (2) and the first contacting surface (12) of the movable part (6) of the actuator (4). These flexible tabs (11) act as biasing means for pressing the movable part (6) of the888 actuator (6) away from the backplate (2), that is, in an opposite direction to the outer side, and they can be in contact with any front surface of the movable part (6) for example with the first contacting surface (12).

The assembly (1) has second engaging means for coupling the movable part (6) of the actuator (4) with the cover frame (7). These second engaging means comprises tongues (15) extending radially from the movable part (6) of the actuator (4), and fixation clips (16) integrally formed with the cover frame (7). The tongues (15) extend radially from the movable part (6) in between the first and second contacting surfaces (12, 13).

The cover frame (7) has a window (9) and an internal wall (22) surrounding the window (9), and the movable part (6) of the actuator (4) or at least a part of it, is received in that window (9), and the fixation clips (16) are integrally formed with the internal wall (22) of the cover frame (7). The fixation clips (16) project from the cover frame (7) towards the exterior surface of the cover frame (7). Optionally, the fixation clips (16) may be inclined towards the window (9).

The frame (14) of the backplate (2) in this embodiment is circumferential and concentric with the internal wall (22), and it is received at least in part in the internal wall (22). Furthermore, the internal wall (22) of the cover frame (7) has an annular surface (17) extending radially, and the movable part (6) of the actuator (4) is retained in between the fixation clips (16) and the annular surface (17) of the internal wall (22). The annular surface (17) has some notches (23) for the passage of the flexible clips (10) for their fixation to the movable part (6) of the actuator (4).

The tongues (15) rest on the annular surface (17), and the fixation clips (16) press from the first contacting surface of the actuator (4).

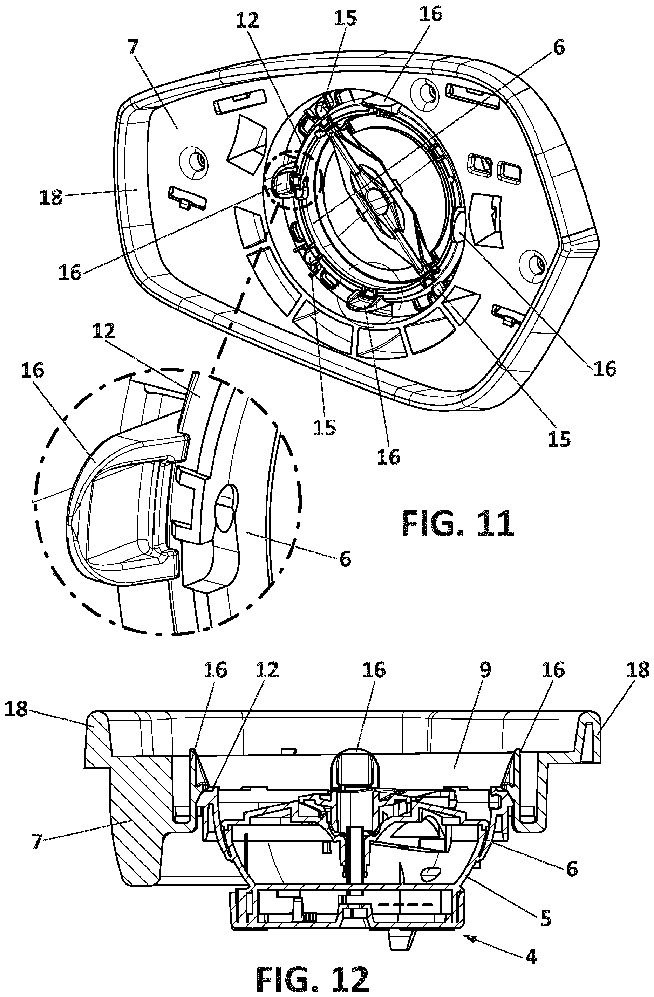

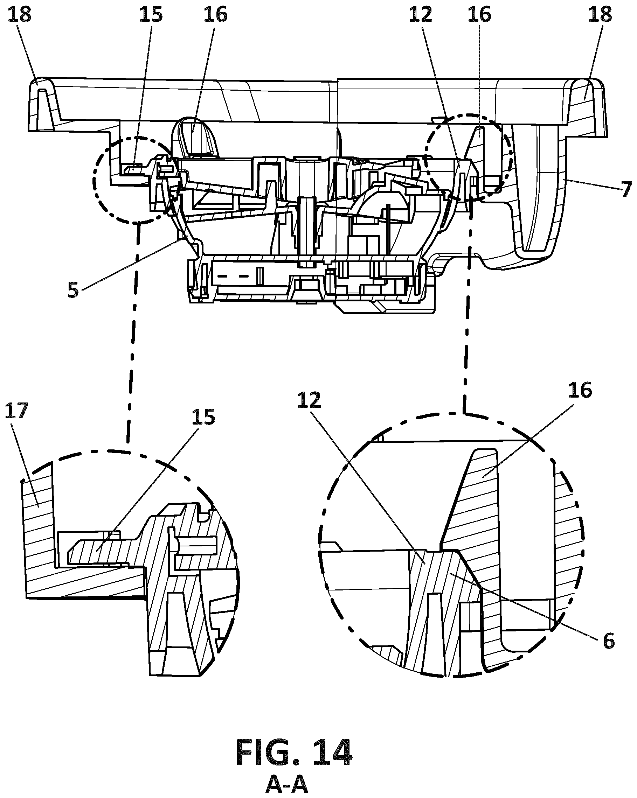

The fixation clips (16) are in contact with the first contacting surface (12) of the movable part (6) as better shown in the enlarged detail "A" of **Figure 11****,** and in **Figure 14****,** so that the fixation clips (16) retain the movable part (6), and the tongues (15) are in contact with the annular surface (17) of the internal wall (22), in particular the tongues (15) are received inside walls (24) for the correct positioning of the tongues (15). In this way, the cover frame (7) and the movable part (6) of the actuator (4), are directly coupled to each other.

The cover frame (7) has an outer wall (18) extending along the perimeter of the cover frame (7), and this outer wall (18) at least partially surrounds the backplate (2).

Another aspect of the invention refers to a method of assembling the exterior rear view mirror assembly previously defined, wherein the method comprises the following steps:
directly coupling the backplate (2) to the movable part (6) of the actuator (4),
directly coupling the cover frame (7) to the movable part (6) of the actuator (4), and coupling the base (5) of the actuator (4), that is, the fixed part of the actuator (4) to a housing bracket (25).

Preferably, the method also includes a step of forming or attaching a mirror surface (3) on the outer side (2a) of the backplate (2).

The direct coupling between the backplate (2) and the movable part (6) of the actuator (4), and the direct coupling between the cover frame (7) to the movable part (6) of the actuator (4), mean that those components are attached without participation of any other component acting as interface between them, although fastening means, such as screws or similar means, may be used for the attachment.

## Claims

1. Exterior rear view mirror assembly (1) for vehicles, comprising:
a support base (19) for attaching the assembly (1) to a vehicle,
a mirror head (20) coupled to the support base, the mirror head (20) comprising:
a housing comprising a cover frame (7),
a backplate (2) having an outer side (2a) and an inner side (2b),
a mirror surface (3) supported on the outer side (2a) of the backplate (2),
an actuator (4) comprising a base (5) and a movable part (6) coupled to the base (5) and movable with respect to the base (5),
wherein the backplate (2) is coupled to the movable part (6) of the actuator (4),
wherein the cover frame (7) is also coupled to the movable part (6) of the actuator (4),
**characterized in that**, the coupling between the backplate (2) and the movable part (6) of the actuator (4) and the coupling between the cover frame (7) and the movable part (6) of the actuator (4) are direct couplings.

2. The assembly (1) of claim 1, wherein the cover frame (7) has a window (9) and an internal wall (22) surrounding the window (9), and wherein the movable part (6) of the actuator (4) or at least a part of it, it is received in the window (9) of the cover frame (7), and wherein the backplate (2) has first engaging means (10) at its inner side (2b), and wherein the first engaging means (10) pass through the window (9) of the cover frame (7) and are engaged with the movable part (6) of the actuator (4).

3. The assembly (1) of claim 1 or 2, further comprising second engaging means for coupling the movable part (6) of the actuator (4) with the cover frame (7), and wherein these second engaging means are formed at the internal wall (22) of the cover frame (7) and at the movable part (6) of the actuator (4).

4. The assembly (1) of any of the preceding claims, wherein the first engaging means are flexible clips (10) protruding from the inner side (2b) of the backplate (2), the flexible clips (10) having one end integrally formed with the inner side (2b) of the backplate (2), and a free end (10a) configured as a hook.

5. The assembly (1) of any of the preceding claims, further comprising biasing means interposed in between the inner side (2b) of the backplate (2) and a front surface of the movable part (6) of the actuator (4), the biasing means pressing on the movable part (6) of the actuator (6) away from the backplate (2).

6. The assembly (1) of claim 5, wherein the biassing means are flexible tabs (11) having one end integrally formed with the inner side (2b) of the backplate (2), and another end is a free end.

7. The assembly (1) of any of the preceding claims, wherein the movable part (6) of the actuator (4) has a first contacting surface (12) and a second contacting surface (13) distanced from the first contacting surface (12), wherein the first contacting surface (12) of the actuator (4) is closer to the mirror surface (3) than the second contacting surface (13) when the actuator (4) and the backplate (2) are assembled together, and wherein the first engaging means of the backplate (2) are engaged with the second contacting surface (13).

8. The assembly (1) of any of the preceding claims, according to claim 3 and 7, wherein the second engaging means are in contact with the first contacting surface (12) of the actuator (7).

9. The assembly (1) of any of the preceding claims, according to claims 5 to 8, wherein the biassing means are in contact with the first contacting surface (12) of the actuator (4).

10. The assembly (1) of any of the preceding claims, wherein the backplate (2) has a frame (14) formed in its inner side (2b), wherein the flexible clips (10) and the flexible tabs (11) protrude from the frame (14).

11. The assembly (1) of claims 3 and 10, wherein the second engaging means comprises tongues (15) extending radially from the movable part (6) of the actuator (4), and fixation clips (16) integrally formed with the internal wall (22) of the cover frame (7), and wherein the internal wall (22) has an annular surface (17) extending radially, and wherein the movable part (6) of the actuator (4) is retained in between the fixation clips (16) and the annular surface (17) of the internal wall (22).

12. The assembly (1) of claim 11, wherein the fixation clips (16) are in contact with the first contacting surface (12) of the movable part (6), and the tongues (15) are in contact with the annular surface (17) of the internal wall (22).

13. The assembly (1) of any of the preceding claims, wherein the cover frame (7) has an outer wall (18) extending along the perimeter of the cover frame (7), and wherein said wall at least partially surrounds the backplate (2).

14. The assembly (1) of any of the preceding claims, wherein the backplate (2) and the cover frame (7) are independent bodies, and there is a separation space (8) in between the backplate (2) and the cover frame (7).

15. Method of assembling the exterior rear view mirror assembly (1) defined in any of the preceding claims, the method comprising the following of steps:
directly coupling the backplate (2) to the movable part (6) of an actuator (4),
directly coupling the cover frame (7) to the movable part (6) of the actuator (4), and
coupling a base (5) of the actuator (4) to a housing bracket (25).
